# EUROPEAN PATENT APPLICATION

(11) **EP 2 377 915 A1**
(43) Date of publication of application: **19.10.2011**
(21) Application number: 11162575.2
(22) Date of filing: 15.04.2011
(51) Int. Cl.: C12C 1/15, C12C 1/033, C12C 1/00, C12C 1/12

(54) **Machine and method for malting barley**

(30) Priority: 16.04.2010 IT UD20100080
(71) Applicant: B.B.C. Srl, 31054 Possagno (TV) (IT)
(72) Inventor: Biondo, Michele, 31034 Cavaso del Tomba (TV) (IT); Biondo, Manuele, 31033 Castelcucco (TV) (IT)
(74) Representative: Petraz, Gilberto Luigi

(57) **Abstract**

Machine for malting barley comprising a substantially closed box-shaped body (12) inside which a containing seating (13) is defined for a quantity of barley, predefined or able to be predefined; a hydraulic circuit (24) by means of which at least air and water are made to circulate alternately inside the box-shaped body (12) in order to modify the content of humidity in the barley over time; heating means (40, 42), associated with the hydraulic circuit (24) to determine the heating of the air and the water during their circulation in the hydraulic circuit (24). The machine comprises weighing means (18) associated with the body (12) and able to detect, directly or indirectly, the weight of the barley during processing and therefore its humidity content, and control and processing means (60) to control and compare the humidity content according to the weight, and therefore the initial humidity content of the barley, in order to condition at least the alternate circulation of air and water in the box-shaped body (12), through the hydraulic circuit (24), and the functioning of the heating means (40, 42).

## Description

### FIELD OF THE INVENTION

The present invention concerns a machine for malting barley and the relative method, used for the preliminary processing of barley in the production of beer. In particular, the malting machine according to the present invention is typically of the automatic type.

### BACKGROUND OF THE INVENTION

It is known that in the production of beer, a preliminary process is provided to malt the barley, so as to confer on it the desired values of humidity during germination and a desired level of roasting depending on the specific type of beer to be obtained, for example pale ale, red ale, dark ale or other.

This known method provides at least four steps, that is, a damping or steeping step in which the barley is kept alternately in a bath of water and dried until it has a predetermined and desired average humidity content, typically 38%.

The known method also provides a germination step in which the barley is made to germinate so as to obtain shoots or rootlets having a predetermined average size. At the end of germination, the barley is then subjected to a drying step, in order to reduce the average humidity content to a further predetermined value, typically around 4%.

Finally, the method provides a roasting step in which the barley is roasted, at one or more predetermined temperatures, so as to obtain a desired final product for the specific type of beer to be produced.

One disadvantage of the known method is that, in order to reduce the final costs of producing the beer, and hence the relative cost at the point of sale, it is necessary to work large quantities of barley. This entails the need for big immersion vats, disposed in several parallel processing lines, in which the barley is immersed in the steeping and germination steps. Furthermore, to maintain the desired working parameters, typically temperature and humidity, during the different working steps, it is necessary to provide expensive and complicated devices to control and supervise the working and movement parameters of the barley as it passes through the different working steps. All this entails the need for large operating spaces which render this method unsuitable for an artisan type of production, such as for example for production in small breweries or premises that can also supply a service for the consumption of the final product.

Document US-A-3,589,684 describes a malting machine that comprises a cylindrical drum for malting barley, containing a load of 2 tons of barley, in which air and water are made to circulate in controlled conditions of temperature and humidity.

Document WO-A-88/02396 describes an apparatus and method for micro-malting barley in a tank under controlled conditions, in which air and water are made to circulate and temperature and humidity sensors are provided associated with a micro-controller. This apparatus and method, however, are somewhat complex and expensive, due to the numerous sensors and correlated controls and processing of the data required.

The scientific publication by Gothard P. G. and Smith D. B., "A computer-controlled micro-malting apparatus", in Journal of Cereal Science vol. 4 n. 1, 31.01.1984, pages 71-78, describes an automated apparatus for malting barley for evaluating small quantities of barley developed in the agronomic field, for the purposes of quality control. The apparatus provides to weigh the different samples of barley at the beginning, to apply different malting processes, and the malt is analyzed according to a precise method, also determining the humidity for the purposes of the process, which is between 4 and 5%.

One purpose of the present invention is to achieve a machine, and the relative method, for malting barley which allows a substantially automatic processing; the machine is limited in size, not complex and costly, and can be installed in small premises, for the production of beer even in small quantities.

Another purpose of the present invention is to achieve a machine, and the relative method, for malting barley which has low working costs and which allows a substantially automatic working, very accurate and with low costs even for small quantities of barley, with a control of the most important working parameters that is continuous during the process, so as to guarantee a high final quality of the malt produced.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a machine for malting barley according to the present invention comprises:
- a substantially closed box-shaped body, inside which a containing seating is defined for a quantity in weight of barley, predefined or predefinable, to be subjected to malting;
- at least a hydraulic circuit by means of which at least air and water are made to alternately circulate inside the box-shaped body in order to modify over time the humidity content of the barley introduced therein;
- heating means, associated with said hydraulic circuit so as to determine the heating of the air and water as they circulate in the hydraulic circuit.

According to one feature of the present invention, the malting machine also comprises:
- weighing means associated with the body and able to detect continuously or at predefined intervals at the beginning, end and during the malting cycle, the weight of the barley while it remains inside the body and therefore its humidity content, according at least to the initial weight and humidity content; and
- control and processing means also cooperating with the weighing means to process at least cyclically the weight of the barley detected during processing, correlating it to the humidity content and to the alternate circulation of air and water in the box-shaped body, through the hydraulic circuit, and to the functioning of the heating means, conditioning the circulation of air and water and the functioning of the heating means according to said correlation.

In particular, according to the detection of weight and the evaluation of the difference in weight at moments of time predetermined at the start, end and during the malting cycle, at least the alternate circulation of the air and water in the box-shaped body is conditioned. This precise and continuous detection, or at least at predefined intervals not only at the beginning and end but also during the intermediate working steps, allows to evaluate the difference between values of weight detected and/or the initial weight of the barley, given that the initial humidity of the barley is a known value and indicated by the supplier of the barley.

The present invention is unlike the state of the art, which carries out a traditional weighing of the barley only at the start of the process, and then possibly makes an "end-point" measurement of the final humidity, which no longer allows to intervene in order to modify the quality of the final product; on the contrary the present invention allows a fine and continuous control, or at least at predefined intervals during the intermediate working steps, on the properties of the final product, in particular the humidity and hence quality of the various malting steps, even in the intermediate phases of the malting steps, intervening and correcting when necessary, guaranteeing a high and repeatable final quality both simply and accurately, without needing a large number of sensors and controls.

According to another feature of the present invention, the control and processing means determine the automatic functioning of the hydraulic circuit and the heating means according to the weight detected by the weighing means so as to obtain a desired humidity of the barley.

According to a variant of the present invention the weighing means comprise one or more load cells, directly associated with the box-shaped body, advantageously located below it.

In this way, the whole processing of the barley is carried out in the box-shaped body, substantially automatically, which entails a considerable compactness and reduction in the sizes of the machine. Therefore, the malting machine can also be installed in small places or premises and can be used for the production of small quantities of beer.

According to one solution, the malting machine comprises at least a drum element, into which the barley to be subjected to malting is introduced, selectively rotatable inside the box-shaped body and comprising at least a perforated surface through which air and water are made to flow.

The drum element therefore allows to keep the barley always in efficient conditions of steeping and ventilation during the various steps of the malting.

According to this solution, the control and processing means determine the alternate circulation of air and water in the hydraulic circuit, conditioning the flow rate thereof and the selective rotation of the drum element, and drive the heating means according to the weight detected by the weighing means.

According to another variant, the malting machine according to the present invention comprises conditioning means able to cool the water and/or the air in the hydraulic circuit.

It comes within the spirit of the present invention to provide that in this solution the machine comprises user interface means, associated with the automatic control and processing means, in order to display predetermined operating parameters of the machine, and/or to insert and modify predetermined functioning parameters of the machine.

The operating parameters can comprise, for example, the temperature detected of the air and water, the humidity content detected in the air, the initial humidity of the barley or others.

The functional parameters can comprise for example the heating temperature of the fluids, the desired flow rate of the fluids in the hydraulic circuit, the number of rotation cycles of the drum element, the speed of rotation of the drum element or others.

According to a variant, the machine also comprises suction means, associated with the box-shaped body, in order to remove the gases that are generated, typically carbon dioxide, during the processing of the barley, such as for example during germination.

The present invention also concerns a method for malting barley using a malting machine according to the present invention, comprising:
i) - a loading step in which a quantity of barley to be subjected to malting, predefined or able to be predefined and having an initial humidity content known in advance, is introduced into a box-shaped containing body;
ii) - a washing step, in which water is introduced into the box-shaped body in order to wash the surface of the barley introduced;
iii) - a steeping step, in which air and water are alternately made to circulate inside the box-shaped body, in order to modify the humidity content of the barley over time so as to obtain, at the end of the steeping step, a first desired humidity content in the barley;
iv) - a germination step in which the barley introduced into the box-shaped body is made to germinate, and in which air is made to circulate in the box-shaped body;
v) - a drying step in which, by means of ventilation means, air is made to circulate, suitably heated by heating means, in the box-shaped body in order to reduce the humidity of the germinated barley to bring it to a second desired humidity content;
vi) - a roasting step in which, by means of the heating means and the ventilation means the barley contained in the box-shaped body is roasted and subsequently cooled.

According to the present invention, the method for malting barley provides: vii) to detect, continuously or at predefined intervals at the start, end and during the malting cycle defined by said steps i) - vi), the weight of the barley while it remains inside the body and hence the humidity content;
viii) to process at least cyclically the weight detected of the barley during working, correlating it to the humidity content and to the alternate circulation of air and water in the box-shaped body and to the functioning of the heating means; ix) to condition the circulation of air and water and the functioning of the heating means according to said correlation.

According to one form of embodiment of the present invention, each of the steps i) - vi) comprises at least a sub-step of detecting the weight of the barley in the box-shaped body in which, by means of weighing means, the weight of the barley being processed, and therefore its current humidity content, is automatically detected, which is compared to the initial weight and humidity content. According to this weight detection, the alternate circulation of air and water in the box-shaped body is at least conditioned, also with regard to the flow rate and the functioning temperature of the heating means.

According to a variant of the present invention, in at least one of the above steps the barley is introduced into a drum element which is made to rotate in the box-shaped body. The rotation is conditioned by the humidity content indirectly detected by the weight detection means.

According to another variant, at least the steeping and germination steps comprise conditioning sub-steps in which, by means of conditioning means, the air and/or the water are cooled to a desired temperature.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral schematic view, in section, of a malting machine according to the present invention;

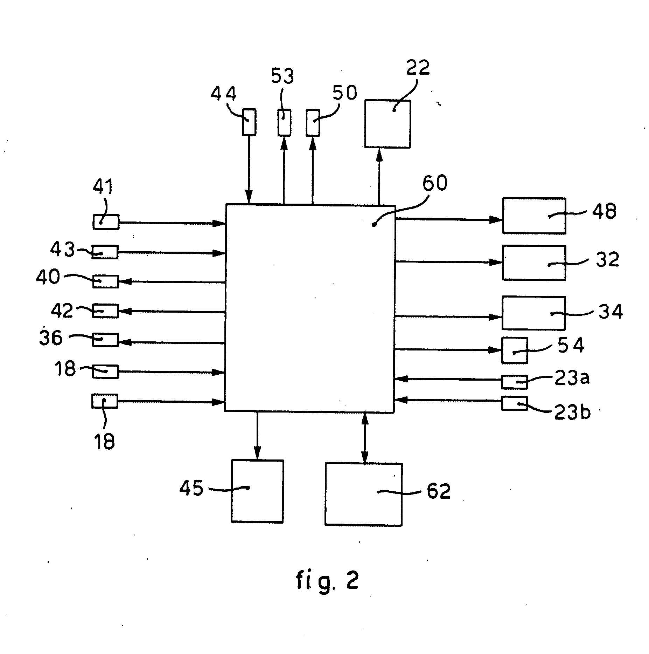

- fig. 2 is a schematic block diagram of the machine in fig. 1;
- fig. 3 is a schematic view of the machine in fig. 1 in a first working configuration;
- fig. 4 is a schematic view of the machine in fig. 1 in a second working configuration; and
- fig. 5 is a flow chart of a form of embodiment of the malting method for barley according to the present invention.

### DETAILED DESCRIPTION OF A PREFERENTIAL FORM OF EMBODIMENT

With reference to the attached drawings, a malting machine 10 according to the present invention comprises a box-shaped body 12, a support structure 14, one or more load cells 18, of a known type, a containing drum 20 or cage, disposed inside the body 12, a hydraulic circuit 24, a fan 32, a first 40 and a second heating resistance 42. The machine 10 also comprises an electronic control and processing unit 60, such as a PLC or suchlike, and a user interface 62.

The body 12, substantially cylindrical in shape, defines a seating 13, or internal containing tank where there is the drum 20 into which the barley to be malted is introduced and, alternately, water and air, during the malting method as will be described hereafter.

The body 12 is made for example of stainless steel or other material suitable to resist the action of the humidity; it has a loading mouth 12a to load the barley into the drum 20, with which a loading door 21 is associated. The body 12 also has an unloading door 19 to unload the barley at the end of the working. The doors 19, 21 also have respective contacts 23a, 23b for closing the door, connected to the electronic unit 60.

The body 12 is stably supported by a support structure 14 provided with uprights 15 and crosspieces 16.

The support structure 14 rests on the load cells 18 which in turn are located resting stably, directly or indirectly, on the ground or floor that supports everything.

In particular, the load cells 18 are installed and distributed on the lower ends of the uprights 15 of the support structure 14 that rest on the ground or floor, so as to allow to detect the weight of the barley subjected to malting and contained in the drum 20 both uniformly and continuously, or at least at predefined intervals during the intermediate working steps, not only at the beginning and end of the process.

The load cells 18 are in turn electrically connected to the electronic unit 60 as will be described in more detail hereafter.

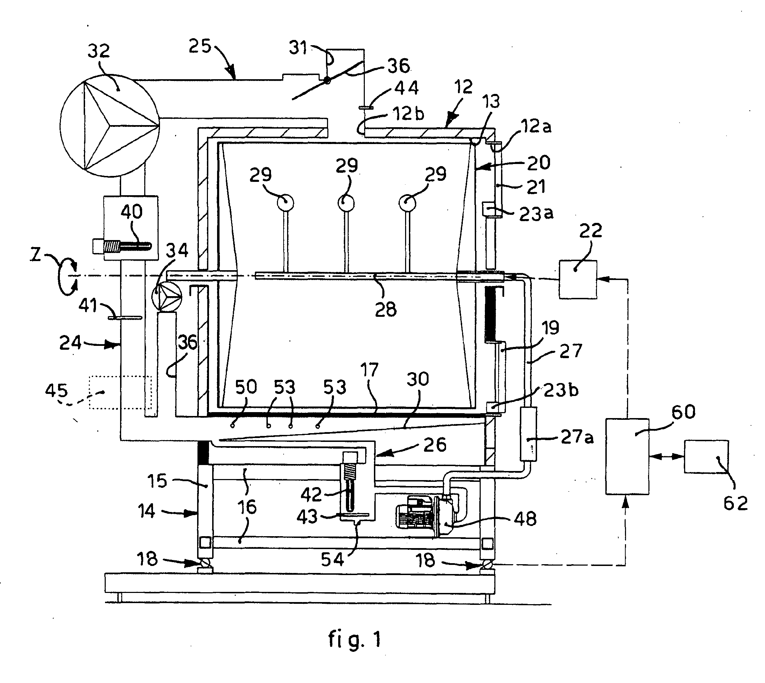

The drum 20, also cylindrical in shape, is suitable to contain the barley seeds introduced into the machine during the malting method. The drum 20 is disposed axially inside the body 12 and has an internal diameter slightly smaller that of the body 12. The drum 20 can also rotate selectively, by means of an associated motor 22 driven by the electronic unit 60, in two opposite directions of rotation around an axis of rotation "Z", in this case horizontal (fig. 1).

The lateral wall of the drum 20 is provided with a plurality of through holes, not shown, about 2 in size, smaller than the average size of the barley seeds so as to prevent them from coming out of the drum 20. The holes also allow air and water to pass through the drum 20 inside the body 12 and the hydraulic circuit during the malting of the barley.

The hydraulic circuit 24 develops outside the seating 13 of the containing body and allows to distribute, inside the drum 20, in a substantially alternating manner, water to soak the barley seeds or air to dry them, as will be described hereafter.

In particular, the hydraulic circuit 24 comprises a first part 25 which develops outside the body 12 and connects an upper aperture 12b of the body 12 with a bottom wall 17, so as to allow the air to circulate in some specific steps.

The first part 25 is also associated with a valve 36, of the motorized type, suitable to selectively intercept the air circulating in the hydraulic circuit 24. The valve 36 is disposed in proximity with a discharge mouth 31 provided above the body 12 and provides at least two operating configurations, in a first of which it is disposed so as to cause the air to come out from the discharge mouth 31, and a second operating configuration in which it allows to circulate the air between the first part 25 and the inside of the body 12.

In the first part 25 the fan 32 and the first resistance 40 are provided, connected to the electronic unit 60; they allow to move the air forcedly and heat it inside the hydraulic circuit 24 and inside the body 12, that is, the drum 20. The first part 25 of the hydraulic circuit 24 is also associated with a first temperature probe 41, of a known type, for example a digital probe or an analogical probe, also connected to the electronic unit 60. The first probe 41 allows to monitor the air temperature so as to allow to regulate the functioning power of the first resistance 40 to maintain a desired operating temperature.

The hydraulic circuit 24 also comprises a second part 26, hydraulically connected to the first part 25 in correspondence with a bottom pipe 30, which is associated with the bottom wall 17. The second part 26 connects, outside the body 12, the bottom wall 17 with an internal pipe 28 to the drum 20 and substantially parallel to the axis Z, by means of a return pipe 27. The second part 26 of the hydraulic circuit 24 therefore allows the water used for processing the barley to recirculate. The second part 26 is also associated with the second heating resistance 42, a second temperature probe 43, a pump 48 and a filter 27a disposed on the return pipe 27. The internal pipe 28 is also hydraulically connected with a plurality of washing balls 29 suspended inside the drum 20 by means of which it is possible to spray the water that flows in the second part 26 onto the barley contained in the drum 20.

On the bottom pipe 30 there is also a water inlet 50, associated with an electrovalve of a known type, not shown, and commanded by the electronic unit 60 to load the water inside the hydraulic circuit 24. The bottom pipe also has one or more oxygenation valves 53 provided with micro-porous elements to promote the oxygenation of the water.

The second part 26 also comprises a water discharge mouth 54, associated with a relative electrovalve, by means of which the water is completely discharged from the hydraulic circuit 24, so as to allow to pass to a subsequent malting step.

The user interface 62 is associated or integrated with the electronic processing and control unit 60. The user interface 62 comprises at least a display of a known type and an alphanumerical keyboard in order to key in and/or modify operating data of the machine 10. In some forms of embodiment of the keyboard, instead, a touch screen is provided, of a known type, combined with the display, for example a capacitive or resistive touch screen.

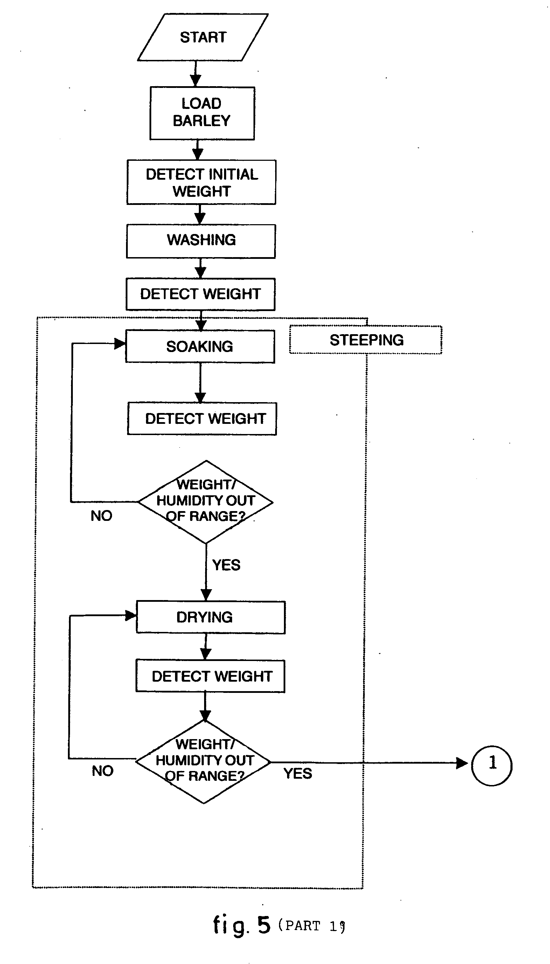

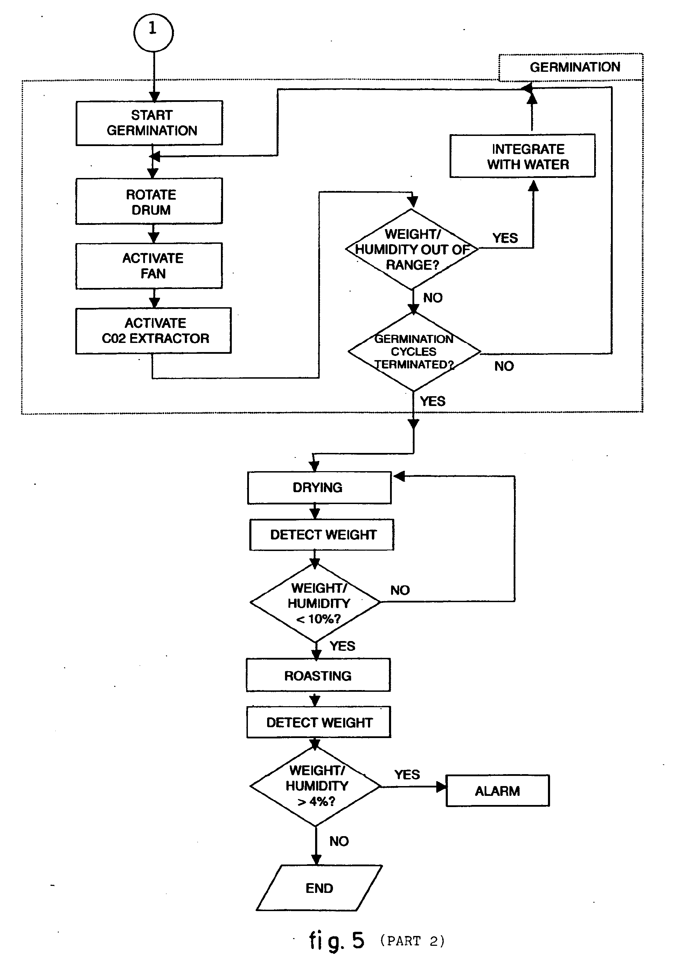

The functioning of the malting machine 10 as described heretofore and the relative malting method will now be described. Fig. 5 also shows a schematic flow chart of the method described, for convenience shown on two consecutive sheets 5/6 (part 1) and 6/6 (part 2).

The malting method provides:
i) - a loading step in which a quantity of barley to be subjected to malting, predefined or able to be predefined and having an initial humidity content known in advance, is introduced into the body 12;
ii) - a washing step, in which water is introduced into the body 12 in order to wash the barley introduced;
iii) - a steeping step, in which air and water are alternately made to circulate inside the body 12, in order to modify the humidity content of the barley over time so as to obtain, at the end of the steeping step, a first desired humidity content in the barley;
iv) - a germination step in which the barley introduced into the body 12 is made to germinate, and in which air is made to circulate in the body 12;
v) - a drying step in which air, suitably heated, is made to circulate in the box-shaped body 12 in order to reduce the humidity of the germinated barley to bring it to a second desired humidity content;
vi) - a roasting step in which the barley contained in the box-shaped body is roasted and cooled.

According to one feature of the present invention, the method provides:
vii) to detect, continuously or at predefined intervals at the start, end and during the malting cycle defined by said steps i) - vi), the weight of the barley while it remains inside the body and hence the humidity content;
viii) to process at least cyclically the weight detected of the barley during working, correlating it to the humidity content and the alternate circulation of air and water in the box-shaped body 12 and to the functioning of the heating;
ix) to condition the circulation of air and water and the functioning of the heating according to said correlation.

In particular, in the first loading step, a desired quantity of barley is introduced into the drum 20 through the loading mouth 12a. In this step, the drum is made to rotate by means of the relative motor 22 until a predetermined loading position is reached, in which its loading mouth 21, which hermetically closes the body 12, is aligned with the mouth 12a to allow an easy introduction of the barley seeds. Before starting the loading step, the desired initial quantity of barley to be loaded, and its initial humidity content, are set by means of the user interface 62.

When the desired value has been reached, this is signaled by a warning, for example acoustic and/or luminous, by the electronic unit 60. The electronic unit 60, by means of the load cells 18 on which the machine 10 is mounted, detects when the exact quantity of barley has been reached for the malting cycle that is about to start.

During this step, the method also verifies, substantially automatically, that the loading door 21 and the unloading door 19 have been correctly closed, and closed hermetically. This is done by means of contact sensors 23a, 23b of a known type, connected electrically to the electronic unit 60.

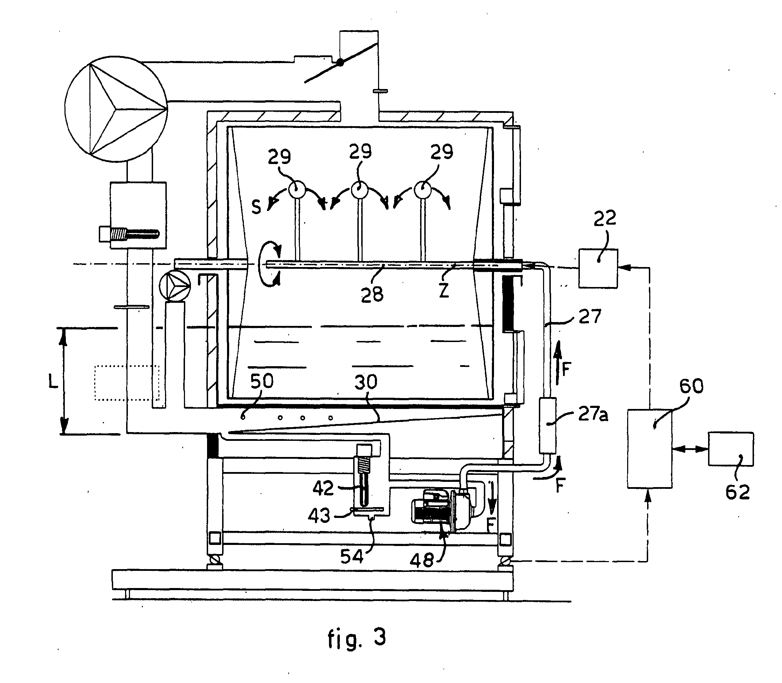

In the subsequent washing step (fig. 3), a predetermined quantity of water is loaded through the water inlet 50, directly connected to the water distribution system, inside the body 12 and the hydraulic circuit 24. The quantity of water introduced is such as to define a level L of water which allows an effective washing of the barley in the drum 20 during its subsequent rotation, substantially covering the whole mass of barley introduced. The drum 20 is then made to rotate, at a predetermined functioning speed, substantially constant, for a desired period of time so as to allow an effective washing of the barley seeds present therein.

Furthermore, in this step the water present in the hydraulic circuit 24 is heated by the second heating resistance 42, in turn driven by the electronic unit 60, to a desired washing temperature.

The temperature of the washing water is maintained by the second temperature probe 43, which signals to the electronic unit any possible discrepancies with respect to the desired temperature, so that it is possible to selectively activate the resistance 42 according to the temperature detected and the temperature set. It is also possible to perform a more accurate conditioning control, in which by means of conditioning means 45 of a known type, the temperature of the water is lowered according to needs.

The washing water is made to circulate by means of the pump 48, also driven by the electronic unit 60, in the second part 26 of the hydraulic circuit 24 as indicated by the arrow "F". The washing water at the desired temperature is then introduced into the drum 20 through the washing spheres 29 and then sprayed as indicated by the arrows "S" and subsequently made to pass through the bottom wall 17 and then to return to the return pipe 27 and the internal pipe 28. Advantageously, the return pipe 27 comprises a filter 27a, outside the body 12, which allows to block any possible impurities that might prevent the correct functioning of the washing spheres 29.

At the end of the washing step, the electronic unit 60 activates the motorized electrovalve associated with the discharge mouth 54, allowing to definitively discharge the water in the hydraulic circuit 24.

The quantity of water to be loaded, correlated to the quantity of barley initially introduced, the washing time and the temperature of the washing water are set as functional parameters, or set point parameters, by means of the user interface 62, and advantageously memorized in electronic memorization means, for example of the non-volatile type, of the electronic control and processing unit 60. In some forms of embodiment the washing step comprises a sequence of washing cycles, at the end of each of which the dirty washing water is discharged from the hydraulic circuit 24 and subsequently clean water is loaded according to the desired quantity, from the distribution network. In this case too the number of washing cycles can be pre-set at the beginning, together with the functional parameters, so as to allow a substantially automatic functioning of the machine 10.

The washing step ends with the definitive discharge of all the water in the hydraulic circuit 24 from the mouth 54, and weighing by means of the load cells 18 of the barley in the drum, and the memorization of the weight thus detected, that is, the humidity content of the barley at the end of washing.

The subsequent steeping step, made substantially automatically, provides to effect an alternate sequence of soaking and drying cycles inside the drum 20, in which air and water are made to circulate alternately in the first 25 and second part 26, so as to obtain, at the end of the steeping step, a first predetermined humidity content of the barley.

In particular, the steeping step, which is carried out automatically and generally lasts about one day, provides a sequence of at least two sub-steps, that is, a first soaking sub-step and a subsequent drying sub-step. This sequence of sub-steps is repeated cyclically, in a substantially automatic manner, for a predetermined number of times so as to determine a desired humidity content of the barley, normally about 38%, suitable for the subsequent germination step.

The soaking sub-step provides to load a predetermined quantity of water, as previously described for the washing step, heated to a desired temperature by the resistance 42. In this sub-step the drum 20 is made to rotate continuously and/or at predetermined intervals, in opposite directions of rotation and at constant rotation speed, the pump 48 is activated in coordination with the rotation of the drum 20, making the water circulate in the second part 26 of the hydraulic circuit 24. Furthermore, the oxygenation valves 53 are activated so as to add oxygen to the water in the drum 20.

At the end of the soaking sub-step, the water is discharged into a storage tank, not shown, hydraulically connected to the hydraulic circuit 24, or discharged definitively through the discharge mouth 54 if it has to be recycled in a subsequent soaking sub-step or if the last soaking sub-step has been reached.

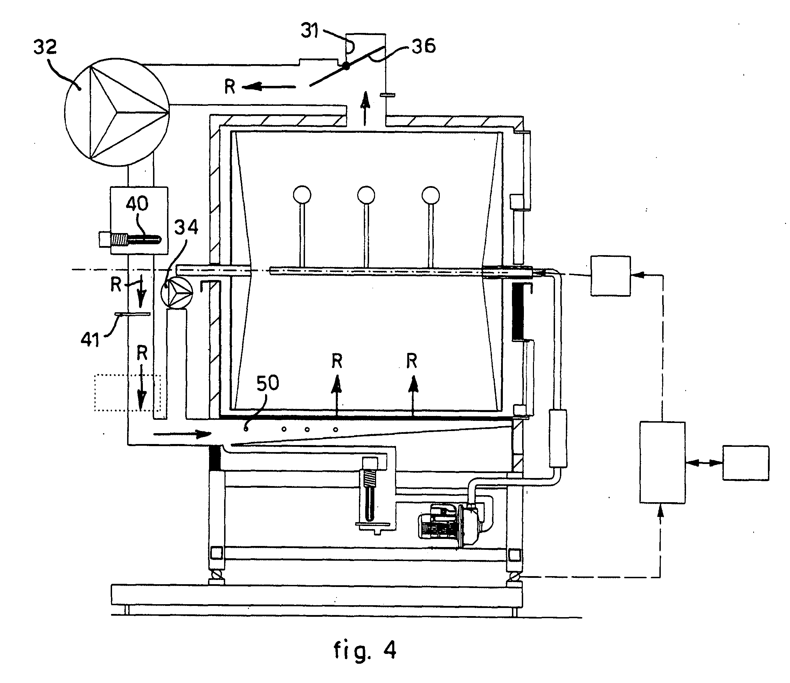

After the water of the previous soaking sub-step has been emptied, the drying sub-step provides to circulate air in the first part 25 of the hydraulic circuit 24 (fig. 4) as indicated by the arrows "R" and in the body 12, that is, in the drum 20 containing the barley. In this case, the valve 36 is disposed in its second operating position to allow the air to circulate and to obstruct the discharge mouth 31, the fan 22 is activated and regulated so as to generate a desired stream of air, and the first heating resistance is driven to heat the air circulating inside the body 12 to a suitable temperature.

According to some forms of embodiment, in each drying sub-step the drum 20 is made to rotate according to predetermined sequences of counter-rotation so as to determine an effective stream of air inside the drum 20.

Alternatively, in coordination with the functioning of the fan 32 and substantially automatically, the extractor device 34 is activated, disposed at one end of a secondary pipe 36 connected to the hydraulic circuit 24, so as to draw toward the outside of the machine the carbon dioxide that is produced inside the drum 20.

At the end of each soaking and drying sub-step, and in any case at the end of the steeping step, the residual humidity content of the barley contained in the machine 10 is detected indirectly by weighing with the load cells 18, in order to regulate automatically the functional parameters to be used in the subsequent soaking and drying sub-steps, such as the temperature of the air and/or water, the speed of rotation of the fan 32, the speed of rotation of the drum 20, the pause times between the sub-steps, the opening time of the oxygenation valves 53 and others.

It is understood that, although the machine 10 is suitable to function substantially automatically, it is possible to activate a manual or semi-manual functioning, in which for every step or sub-step described here it is possible to intervene manually on its functioning and operating parameters, using the user interface 62 to carry out the appropriate modifications.

In the germination step the barley contained in the drum 20 and having a humidity content of 38% is made to germinate. The germination step has a predetermined duration in which the drum 20, the fan 32, the first heating resistance 40 and the extractor 34 are made to function, possibly alternately so as to maintain the correct germination conditions for the barley, determining and controlling by means of the load cells 18 that the humidity content of the barley is within a predetermined range.

Indeed, if the overall weight of the barley detected by the load cells 18 should fall below a minimum value, the electronic unit 60 stops the fan 32 and the extractor 34, and commands water to be introduced into the body 12 according to the weight detected, so as to reintegrate the humidity content of the barley within the desired values. At the end of the reintegration the electronic unit 60 reactivates the functioning of the fan 32 or the extractor according to the functioning program previously stopped.

The germination step provides at least four germination cycles at the end of which the barley is ready to be subjected to the subsequent drying step, in which the barley is subjected to forced ventilation again inside the drum 20.

In the drying step at least five ventilation sub-steps are carried out, in each of which forced air is made to circulate inside the drum 20, regulating effectively in each sub-step both the air temperature, by means of the first heating resistance 40, the drawing speed of the air, that is, the speed of rotation of the fan 32, the percentage closure of the valve 36 and the movement of the drum 20, and the sequence of its counter-rotations. This is to obtain a final humidity content of the barley of about 10%, always controlling the actual weight by means of the load cells 18.

Advantageously, in some forms of embodiment, the machine is also provided with a humidity probe 44, disposed in proximity with the air recirculation valve 36 by means of which the recirculation humidity in the air is detected so as to regulate, substantially automatically and with greater accuracy, the different functioning parameters of the machine 10 during the various steps of the method.

In the subsequent roasting step, when the overall humidity content of the barley detected by weighing by means of the load cells 18 has gone below about 10%, the barley is taken to a temperature higher than at least 80°C, depending on the specific type of beer to be produced, for a predetermined period of time.

The increase in the air temperature, and also its delivery rate as regulated by the fan 32, is connected to the specific humidity content that is detected moment by moment by the weighing carried out by the load cells 18. In fact, to prevent an undesired breakage of the barley seeds due to a temperature increase incompatible with their actual humidity content, the increase is achieved substantially automatically by means of the electronic unit 60 which, according to a predetermined series of profiles or theoretical heating curves, regulates the first heating resistance 40, the speed of the fan 32 and the valve 36 so as to determine the automatic increase in the air temperature, according to the actual value of humidity of the barley and/or air flowing in the drum 20.

At the end of the drying step, the first heating resistance 40, the fan 32 and the valve 36 are driven by the electronic unit 60 so as to take the humidity content of the barley to 4%.

Subsequently the electric resistance 40 is de-activated or regulated so as to use the air to cool the barley thus treated to a temperature of about 20 - 25°C.

At the end of this step the barley can be removed from the machine 10 to be sent to a subsequent treatment to prepare the beer.

It is clear that modifications and/or additions of parts and/or steps may be made to the malting machine 10 and relative malting method as described heretofore, without departing from the field and scope of the present invention.

## Claims

1. Machine for malting barley comprising:
- a substantially closed box-shaped body (12) inside which a containing seating (13) is defined for a quantity of barley, predefined or able to be predefined,
- at least a hydraulic circuit (24) by means of which at least air and water are made to circulate alternately inside said box-shaped body (12) in order to modify the content of humidity in the barley over time,
- heating means (40, 42), associated with said hydraulic circuit (24) to determine the heating of the air and the water during their circulation in the hydraulic circuit (24), **characterized in that** it comprises:
- weighing means (18) associated with the body (12) and able to detect, continuously or at predefined intervals at the beginning, end or during the malting cycle, the weight of the barley while it remains inside said body (12) and therefore its humidity content, and
- control and processing means (60) also cooperating with the weighing means (18) to process at least cyclically the detected weight of the barley during the malting, correlating it to the humidity content and to the alternate circulation of air and water in the box-shaped body (12), through the hydraulic circuit (24), and to the functioning of the heating means (40, 42), conditioning said circulation of air and water and said functioning of the heating means (40, 42) according to said correlation.

2. Machine as in claim 1, **characterized in that** the processing and control means (60) determine the automatic functioning of the hydraulic circuit (24) and of the heating means (40, 42) according to the weight detected, in order to obtain the desired humidity of the barley.

3. Machine as in claim 1, **characterized in that** the weighing means comprise one or more load cells (18) located under the box-shaped body (12).

4. Machine as in claims 1, 2 or 3, **characterized in that** it comprises at least a drum element (20), into which the barley to be subjected to malting is introduced, selectively rotatable inside the box-shaped body (12) and comprising at least a perforated surface, through which the air and water are made to flow.

5. Machine as in claim 4, **characterized in that** the control and processing means (60) determine the alternate circulation of air and/or water conditioning their rate of flow in the hydraulic circuit (24), the selective rotation of the drum element (20) and the drive of said heating means (40, 42) according to the values of weight detected by the weighing means (18).

6. Machine as in any claim hereinbefore, **characterized in that** it comprises conditioning means (45) able to cool the water and/or the air in said hydraulic circuit (24).

7. Machine as in any claim hereinbefore, **characterized in that** it comprises user interface means (62), associated with said control and processing means (60), for the display of predetermined operating parameters, and/or to insert and modify predetermined functional parameters of the machine.

8. Machine as in any claim hereinbefore, **characterized in that** it comprises suction means (34) able to extract gaseous waste products produced during the processing of the barley.

9. Malting method for barley comprising:
i) - a loading step in which a quantity of barley to be subjected to malting, predefined or able to be predefined and having an initial humidity content, is introduced into a box-shaped containing body (12);
ii) - a washing step, in which water is introduced into the box-shaped body (12) in order to wash the barley introduced;
iii) - a steeping step, in which air and water are alternately made to circulate inside the box-shaped body (12), in order to modify the humidity of the barley over time so as to obtain, at the end of the steeping step, a first desired humidity content in the barley;
iv) - a germination step in which the barley introduced into the box-shaped body (12) is made to germinate, and in which air is made to circulate in the box-shaped body (12);
v) - a drying step in which, by means of ventilation means (32), air is made to circulate, suitably heated by heating means (40, 42), in the box-shaped body (12) in order to reduce the humidity of the barley to bring it to a second desired humidity content;
vi) - a toasting step in which, by means of said heating means (40) and said ventilation means (32) the barley contained in the box-shaped body is roasted and cooled; **characterized in that** it provides:
vii) to detect, continuously or at predefined intervals at the beginning, end or during the malting cycle defined by said steps i) - vi), the weight of the barley while it remains inside said body (12) and therefore its humidity content;
viii) to process at least cyclically the weight of the barley detected during the malting, correlating it to the humidity content and to the alternate circulation of air and water in the box-shaped body (12), and to the functioning of the heating means (40, 42);
ix) to condition said circulation of air and water and said functioning of the heating means (40, 42) according to said correlation.

10. Method as in claim 9, **characterized in that** each of said steps i) - vi) comprises at least a sub-step of detecting the weight of the barley in the box-shaped body (12) in which, by means of weighing means (18), the weight of the barley being processed, and therefore its humidity content, is automatically detected, which humidity content is compared to the initial weight and humidity content in order at least to condition the alternate circulation of air and water in the box-shaped body (12) and the functioning temperature of the heating means (40, 42).

11. Method as in claim 9 or 10, **characterized in that** in at least one of said steps the barley is made to selectively rotate in a drum element (20), inside said box-shaped body (12), according to the humidity content indirectly detected by said weighing means (18), so as to maintain the barley in efficient conditions of soaking and ventilation.

12. Method as in claims 9, 10 or 11, **characterized in that** at least the alternate circulation of air and water in the hydraulic circuit (24) and in the box-shaped body (12), the drive of said heating means (40, 42) and the comparison of the values of weight, that is, humidity of the barley, are automatically carried out by control and processing means (60).

13. Method as in claims 9 to 12, **characterized in that** at least in said germination step, by means of suction means (34), the gases which are generated during the processing of the barley, typically carbon dioxide, are extracted from the box-shaped body (12).

14. Method as in claims 9 to 13, **characterized in that** at least the steeping and germination steps comprise conditioning sub-steps in which, by means of conditioning means (45), the air and/or the water in said box-shaped body (12) are cooled to a desired temperature.
